# EUROPÄISCHE PATENTSCHRIFT

(11) **EP 2 051 849 B1**
(45) Veröffentlichungstag und Bekanntmachung des Hinweises auf die Patenterteilung: **31.03.2010**
(21) Anmeldenummer: 07788105.0
(22) Anmeldetag: 01.08.2007
(51) Int. Cl.: B32B 5/18

(54) **POLSTER MIT ERHÖHTER BRANDSICHERHEIT FÜR SITZE IM TRANSPORTWESEN UND MÖBELSEKTOR**
CUSHION WITH INCREASED FIRE SAVETY FOR SEATS IN THE TRANSPORT- AND FURNITURE INDUSTRY
GARNITURE À PROTECTION IGNIFUGE RENFORCÉE POUR LES SIÈGES DANS LES MOYENS DE TRANSPORT ET LE SECTEUR DE L'AMEUBLEMENT

(30) Priorität: 11.08.2006 EP 06118787
(43) Veröffentlichungstag der Anmeldung: 29.04.2009
(73) Patentinhaber: BASF SE, 67056 Ludwigshafen (DE)
(72) Erfinder: LENZ, Werner, 67059 Ludwigshafen (DE); BAUMGARTL, Horst, 55122 Mainz (DE); MÖCK, Christof, 68259 Mannheim (DE)
(86) Internationale Anmeldenummer: PCT/EP2007/057928
(87) Internationale Veröffentlichungsnummer: WO 2008/017628

(56) Entgegenhaltungen:
- EP-A- 1 146 070
- US-A1- 2003 186 044

## Beschreibung

Die Erfindung betrifft ein Polster, umfassend
A) ein oder mehrere Schichten eines offenzelligen Schaumstoffes auf Basis eines Melaminharzes mit einer aufgetragenen brandhemmenden Imprägnierung, und
B) ein nicht brennbares oder schwer entflammbares Bezugsmaterial, und
C) einer nichtbrennbaren, tragenden Unterkonstruktion,
wobei die Schichten A), B) und C) miteinander kraft- form- oder stoffschlüssig verbunden sind.

Viele Schaumkunststoffe werden heute in unterschiedlichen Ausführungen und Kombinationen als Polstermaterial eingesetzt im Fahrzeugbau, in Sitzmöbeln u.v.a.. Nachteil der gängigsten Lösungen ist das Brandverhalten, da die meisten weich-elastischen Schaumkunststoffe nach DIN 4102 u.a. als entflammbar eingestuft sind.

Offenzellige Melaminharzschaumstoffe, wie zum Beispiel BASOTECT® der BASF Aktiengesellschaft werden zur Zeit schon vereinzelt als Polstermaterial in Flugzeugsitzen eingesetzt (US 2003/0186044 A1, WO 2004/052152, EP-A 0 121 049).Der darin benannte flexible offenzellige Melaminharzschaumstoff als solcher ist nach DIN 4102 als schwer entflammbar eingestuft, in Verbindung mit üblichen Textilbezügen häufig nur als normal entflammbar.

Die EP-A 1 146 070 beschreibt offenzellige Melaminharz-Schaumstoffe, deren Zellgerüst zur Verbesserung der Brandeigenschaften ganz oder teilweise mit einem Ammoniumsalz beschichtet ist.

Nicht brennbare Schaumstoffe in Sitzpolstern auf Basis von Melaminharzen sind dagegen nicht bekannt. Die Veröffentlichung WO 02/092676 A1 beschreibt eine nicht brennbare Polyetherpolyol- und/oder Polyesterpolyolvormischung zur Herstellung von Schaumstoffprodukten, insbesondere PU-Schaumstoffen, die GB 2 235 441 A eine Methode zur Isolation mit anorganischem nicht brennbaren Schaum unter Nutzung von Natriumwasserglas.

Das Patent JP 2004050495 A nennt ein nicht brennbares Panel auf Basis von Isocyanate und Polyol mit nicht brennbaren Deckschichten und dessen Herstellprozess. Prinzipiell ähnliches findet sich in der Veröffentlichung KR 1020020003264 A, in der ein Polystyrolschaum mit nicht brennbaren Deckschichten aus einer Mischung aus SiO₂, Al₂O₃, Fe₂O₃, CaO, MgO und Na₂O.

Im Zusammenhang mit Sitzpolstern wird im Dokument US 000005405178A ein feuerresistenter Fahrzeugsitz benannt, eine Hybridlösung bestehend aus einem tragenden Schaumstoffkern und einer feuersicheren Außenschicht aus offenzelligem Schaum, der mit einem Flammschutzmittel imprägniert wurde. Den Abschluss bildet ein feuerfestes Gewebe. Die Veröffentlichung KR 1020040097797 A beschreibt in ähnlicher Weise ein Stuhlsitzpolster in einer nicht brennbaren Struktur, wobei der Schaumkern als brennbar und die doppelte Abdeckung aus Glasfasern als wesentliche nichtbrennbare Komponente beschrieben ist.

Das deutsche Gebrauchsmuster DE 299 02 351 U1 beschreibt ein Verbundsystem aus Platten aus offenzelligem Melaminharz-Schaumstoff und schwer entflammbaren bzw. nicht brennbaren Faservliesen oder Fasergeweben.

Eine nach DIN 4102 als A2-nicht brennbar klassifizierte Komplettlösung für Polster ist nicht beschrieben. Dies war der Anlass, eine entsprechende Problemlösung zu entwickeln.

Aufgabe der vorliegenden Erfindung war es, ein Polster auf Basis von Melaminharzschaumstoffen (Melamin-Formaldehyd-Polykondensationsharze) mit verbesserten Brandeigenschaften zu finden welches insbesondere die Anforderungen nach DIN 4012-A2 erfüllt, d.h. als nicht brennbar eingestuft wird.

Demgemäß wurde das eingangs genannte Polster gefunden.

Die Schichten A werden als Kernstück gebildet aus einem Halbzeug oder Formkörper aus Melaminharzschaumstoff, einem flexiblen und vollständig oder teilweise offenzelligen Schaumstoff aus vorzugsweise Melamin-Formaldehyd-Polykondensat mit filigraner räumlicher Netzstruktur. Sein Raumgewicht beträgt 3 bis 50 g/l, vorzugsweise 6 bis 9 g/l.

Alternativ können auch offenzellige Polyurethanweichschaumstoffe, elastische Schaumstoffe aus Melamin-Harnstoff-Formaldehydharzen und elastisch modifizierten Harnstoff-Formaldehydharzen eingesetzt werden.

Auf die Schichten A) ist eine brandhemmende Imprägnierung aus Aluminiumhydroxid, Magnesiumhydroxid oder Natriumsilikaten aufgetragen. Das Schaumstoffhalbzeug oder -formkörper aus dem offenzellige Schaumstoff auf Basis eines Melaminharzes wird hierzu in einem aus der Textilindustrie bekannten nachträglichen Naßimprägnierverfahren mit den anorganischen Verbindungen als wässrige Lösung oder als Suspension - bevorzugt aber als wässriger Schaum auf den Schaumstoff aufgebracht , dann in einem Walzenstuhl (Foulard) die überschüssige Flüssigkeit abgepresst und anschließend der noch feuchte Schaumstoff per Heißluft, Mikrowelle oder IR-Strahlung getrocknet.

Neben diesen Imprägniermitteln auf anorganischer Basis können auch Polyurethanimprägniermittel mit hohen Flammschutzanteilen verwendet werden.

Durch die brandhemmende Imprägnierung kann je nach Werkstoff und Konzentration das ursprüngliche Raumgewicht im getrockneten Zustand um das mindestens 2-fache, vorzugsweise 4- bis 15-fache angehoben werden. Das Raumgewicht des mit der brandhemmenden Imprägnierung versehenen offenzelligen Schaumstoffs auf Basis eines Melaminharzes beträgt kann somit in der Regel 6 bis 750 g/l betragen. Die Härte eines solchen imprägnierten Schaumstoffs mit Raumgewicht 72 g/l auf Basis von Basotect mit einem Raumgewicht vor Imprägnierung von 9 g/l liegt gemessen nach ISO 2439, Verfahren B bei einer Stauchung von 40% über 300N (gemessen nach 30s).

Zusätzlich zu der brandhemmenden Imprägnierung kann der offenzellige Melaminharzschaumstoff mit einem Hydro- und/oder Oleophobierungsmittel, beispielsweise mit einem Silikon- oder Fluorcarbonharz, behandelt werden.

Als nicht brennbar oder schwer entflammbares Bezugsmaterial B) sind ein- oder mehrlagige Gewebe, Vliese oder Folien aus nach DIN 4102 nicht brennbaren Werkstoffen, vorzugsweise Glasfasern, Mineralfasern, Kohlenstofffasern, Aramidfasern und extrem flammhemmend ausgerüsteten Textilfasern geeignet.

Um die Reinigung von solchen Sitzpolstern zu unterstützen, kann das Bezugsmaterial B) bei Bedarf durch eine hydrophobe oder hydro- und oleophhobe Beschichtung schmutzabweisend ausgerüstet werden, z. B. nach in der Textilindustrie etablierten Verfahren mit Silikon- und Fluorcarbonharzen.

Zur Minderung der Verschmutzung der Bezüge durch elektrostatisch gebundene Staubpartikel eignet sich der Zusatz von Antistatika, insbesondere von kationischen, anionischen und nichtionischen Tensiden, die durch Besprühen, Schaumauftrag oder Eintauchen appliziert werden können.

Die tragende Unterkonstruktion C) besteht ebenso aus einem nach DIN 4102 nichtbrennbaren Werkstoff. Besonders geeignet sind Metalle wie Eisen, Stahl und insbesondere Leichtmetalle wie Aluminium, Magnesium und Legierungen davon. Die Unterkonstruktion ist verformungssteif und stabil ausgeführt, da sie die tragende Funktion übernimmt.

Zur Verbesserung des Komforts und Rückstellverhaltens kann zwischen dem imprägnierten Schaumstoffkern und der Unterkonstruktion ein elatischer oder viskoelastischer Federkern D) aus einem nach DIN 4102 nichtbrennbaren metallischen oder polymeren Werkstoff, z. B. Federstahl oder Kunststoff, z. B. glasfaserverstärktem Polyester eingefügt werden.

Der Bezug kann den Schaumstoffkern partiell oder allseitig abdecken. Die Verbindung zwischen Bezug und Schaumstoffkern oder Rahmenunterkonstruktion kann kraftschlüssig und/oder stoffschlüssig und/oder formschlüssig erfolgen.

Die direkte Verbindung mit dem imprägnierten Schaumstoffkern kann kraftschlüssig erfolgen, indem der Bezug mittel geeigneter Technik über den Schaumstoffkern oder die Unterkonstruktion gespannt wird. Die Befestigung kann über Schnüre, Federelemente oder vorzugsweise Metallheftklammern erfolgen, welche in einer oder mehreren an der Unterkonstruktion befestigten Zementfaseplatte(n) oder-plattenstreifen fixiert werden. Als nach DIN 4102-A2 nicht brennbar eingestuft ist beispielsweise Pericolor® von Firma Eternit AG. Generell sind auch andere nicht brennbare Faserzementwerkstoffe zur Fixierung geeignet. Vorteilhaft hierbei ist die einfache Lösbarkeit solcher Verbindungen im Falle eines Austausches von Polsterkernen oder Reparaturen.

Eine stoffschlüssige Verbindung wird durch partielles oder vollflächiges Verkleben des Bezuges mit dem Schaumstoffkern ermöglicht. Die Applikation des Klebstoffs kann hierbei voll-, teilflächig oder punktweise erfolgen. Geeignet sind nicht brennbare Klebstoffe auf Silikat- oder Phosphatbasis mit Elastifizierhilfsmitteln. Über den Klebewerkstoff, -applikationsdicke und die Auftragsart lassen sich die Eindrückhärte von solchen Verbunden steuern. Ebenso günstig ist die Ausführung für die Oberflächenoptik (Faltenfreiheit).

Formschlüssige Verbindungen können beispielsweise durch Vernadeln der Bezüge mit dem Schaumstoffkern bewirkt werden. Der Vorteil dieses Verfahrens ist der, dass auf weitere brandbeeinflussende Einsatzstoffe verzichtet werden kann.

Ein besonderer Vorteil besteht darin, dass solche nicht brennbaren Polsterkerne aufgrund der Einsatzstoffe verformungsfähig bleiben und sich immer noch niedrige Raumgewichte realisieren lassen. Weiterhin vorteilhaft sind die hohen Gebrauchstemperaturen in der Anwendung. Durch zusätzliches Beifügen von Silikon- oder Fluorcarbonharzen o.ä. zur Imprägnierlösung lassen sich die Schaumstoffkerne hydrophob und oleophob ausrüsten, was bei der Reinigung der Sitzpolster einen zusätzlichen Vorteil darstellt.

Das erfindungsgemäße Polster eignet sich insbesondere für Möbel, Matratzen, Matten und Sitze in Kraftfahrzeugen, Schienenfahrzeugen, Schiffen oder Flugzeugen.

## Patentansprüche

1. Polster, umfassend
A) ein oder mehrere Schichten eines offenzelligen Schaumstoffes auf Basis eines Melaminharzes mit einer aufgetragenen brandhemmenden Imprägnierung aus Aluminiumhydroxid, Magnesiumhydroxid oder Natriumsilikaten und
B) ein nicht brennbares oder schwer entflammbares Bezugsmaterial, und
C) einer nichtbrennbaren, tragenden Unterkonstruktion,
wobei die Schichten A), B) und C) miteinander kraft- form- oder stoffschlüssig verbunden sind.

2. Polster nach Anspruch 1 **dadurch gekennzeichnet, dass** die Schichten A) aus einem Melamin-Formaldehyd-Polykondensationsharz bestehen und mit Imprägnierung ein Raumgewicht im Bereich von 6 bis 750 g/l aufweisen.

3. Polster nach Anspruch 1 oder 2, **dadurch gekennzeichnet, dass** die nach ISO 2439, Verfahren B bei 40% Stauchung gemessene Härte der Schichten A) in Raumgewicht >70 g/l über 300 N liegt.

4. Polster nach einem der Ansprüche 1 bis 3, **dadurch gekennzeichnet, dass** das Bezugmaterial B) aus ein- oder mehrlagigen Vliesen oder Geweben aus Glas- oder Mineralfasern besteht.

5. Polster nach einem der Ansprüche 1 bis 4, **dadurch gekennzeichnet, dass** die Unterkonstruktion C) aus Eisen, Stahl, Aluminium, Magnesium oder deren Legierungen besteht.

6. Polster nach einem der Ansprüche 1 bis 5, **dadurch gekennzeichnet, dass** zwischen den Schichten A) und der Unterkonstruktion C) ein elastischer oder viskoelastischer Federkern D) eingebracht ist.

7. Polster nach einem der Ansprüche 1 bis 6, **dadurch gekennzeichnet, dass** die Schicht A) und das Bezugsmaterial B) stoffschlüssig mit einem Klebstoff auf Basis von Silikaten oder Phosphaten voll-, teilflächig oder punktweise miteinander verbunden sind.

8. Verwendung der Polster nach einem der Ansprüche 1 bis 7 für Möbel, Matratzen, Matten und Sitze in Kraftfahrzeugen, Schienenfahrzeugen, Schiffen oder Flugzeugen.

## Claims

1. A padding material, comprising
A) one or more layers of an open-cell foam material based on a melamine resin with a fire-retardant impregnating material, composed of aluminum hydroxide, magnesium hydroxide or sodium silicates, applied and
B) an incombustible or low-flammability covering material, and
C) an incombustible, supporting substructure,
where the connection between the layers A), B), and C) is the result of force, of interlocking, or of coherent bonding.

2. The padding material according to claim 1, wherein the layers A) are composed of a melamine-formaldehyde polycondensation resin and their density, with impregnating material, is in the range from 6 to 750 g/l.

3. The padding material according to claim 1 or 2, wherein the hardness of the layers A) at density >70 g/l is above 300 N according to ISO 2439, method B with 40% compression.

4. The padding material according to any of claims 1 to 3, wherein the covering material B) is composed of single- or multi-ply nonwovens or woven textiles composed of glass fibers or of mineral fibers.

5. The padding material according to any of claims 1 to 4, wherein the substructure C) is composed of iron, steel, aluminum, magnesium, or their alloys.

6. The padding material according to any of claims 1 to 5, wherein between the layers A) and the substructure C) an elastic or visco-elastic spring core D) has been introduced.

7. The padding material according to any of claims 1 to 6, wherein the layer A) and the covering material B) have been connected to one another, over the entire surface or over part of the surface or locally, by a coherent bond with an adhesive based on silicates or on phosphates.

8. The use of the padding materials according to any of claims 1 to 7 for furniture, mattresses, mats, and seats in motor vehicles, in rail vehicles, in ships, or in aircraft.

## Revendications

1. Coussin, comprenant
A) une ou plusieurs couches en une mousse à cellules ouvertes à base d'une résine de mélamine présentant une imprégnation ignifuge appliquée en hydroxyde d'aluminium, hydroxyde de magnésium ou silicates de sodium et
B) un matériau de revêtement non inflammable ou peu inflammable, et
C) une sous-construction non inflammable, portante,
les couches A), B) et C) étant assemblées l'une à l'autre par une force, mécaniquement ou par une matière.

2. Coussin selon la revendication 1, **caractérisé en ce que** les couches A) sont constituées par une résine de polycondensation de mélamine-formaldéhyde et présentent, avec l'imprégnation, une densité dans la plage de 6 à 750 g/l.

3. Coussin selon la revendication 1 ou 2, **caractérisé en ce que** la dureté des couches A) de densité > 70 g/l, mesurée selon la norme ISO 2439, procédé B à une compression de 40%, est supérieure à 300 N.

4. Coussin selon l'une quelconque des revendications 1 à 3, **caractérisé en ce que** le matériau de revêtement B) est constitué par un ou plusieurs non-tissés ou tissus à une ou plusieurs couches, en fibres de verre ou minérales.

5. Coussin selon l'une quelconque des revendications 1 à 4, **caractérisé en ce que** la sous-construction C) est en fer, acier, aluminium, magnésium ou leurs alliages.

6. Coussin selon l'une quelconque des revendications 1 à 5, **caractérisé en ce qu'**un noyau à ressort D) élastique ou viscoélastique est introduit entre les couches A) et la sous-construction C).

7. Coussin selon l'une quelconque des revendications 1 à 6, **caractérisé en ce que** la couche A) et le matériau de revêtement B) sont assemblés l'un avec l'autre par un adhésif à base de silicates ou de phosphates, sur toute la surface, sur une surface partielle ou de manière ponctuelle.

8. Utilisation du coussin selon l'une quelconque des revendications 1 à 7 pour des meubles, des matelas, des nattes et des sièges dans les véhicules automobiles, les véhicules ferroviaires, les bateaux ou les avions.
